(19) Europäisches Patentamt
European Patent Office
Office européen des brevets

(11) **EP 1 818 745 A2**

(12) **EUROPEAN PATENT APPLICATION**

(43) Date of publication:
**15.08.2007 Bulletin 2007/33**

(51) Int Cl.:
**G05B 19/4103** *(2006.01)*

(21) Application number: **07250499.6**

(22) Date of filing: **07.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.02.2006 JP 2006031371**

(71) Applicant: **FANUC LTD**
**Minamitsuru-gun,**
**Yamanashi 401-0597 (JP)**

(72) Inventors:
• **Endo, Takahiko**
  **Kokubunji-shi, Tokyo 185-0005 (JP)**
• **Watanabe, Tooru c/o Fanuc Dai3virakaramatsu**
  **Yamanashi 401-0511 (JP)**
• **Takeuchi, Yasushi**
  **Hino-shi, Tokyo 191-0062 (JP)**

(74) Representative: **Billington, Lawrence Emlyn et al**
**Haseltine Lake**
**Lincoln House**
**300 High Holborn**
**London WC1V 7JH (GB)**

(54) **Numerical control method**

(57) An axis position is commanded according to data stored in a memory table (Tx,Ty) where the axis position is stored in association with a reference value consisting of time or spindle position. For commanding the shape of a circular arc, a start and end points, a center position, and a radius of the circular arc and designation of sine or cosine are set in advance in the memory table. Then, a movement command for connecting the start point and the end point with the circular arc is output to each of axes, using a trigonometric function defined by the center position of the circular arc, the radius of the circular arc and the designation of sine or cosine, which have been set.

FIG. 7

**Description**

BACKGROUND OF THE INVENTION

Field of the Invention

The present invention relates to a numerical control method for a machine tool. More particularly, the present invention relates to a numerical control method for driving and controlling each of axes of a machine tool based on data stored in table format.

Description of the Related Art

A numerical controller which drives and controls each of control axes of a machine tool based on data stored in a table, rather than a command according to a block of an NC program, is known. In that case, movement amount and position of each of these control axes are stored in advance in the table in table format. This numerical controller allows a tool to operate freely without constraint imposed by conventional command according to a conventional block, thereby providing shorter machining time and higher accuracy of machining.

For example, it is known that time, a rotation angle of a spindle or the like is used as a reference, each position value of a control axis corresponding to each value of the reference is stored as numerical control data, each value of the reference is monitored, and the numerical control data corresponding to the control axis is output for each value of the stored reference, respectively (see Japanese Patent Applications Laid-Open No. 59-177604 and No. 2003-303005).

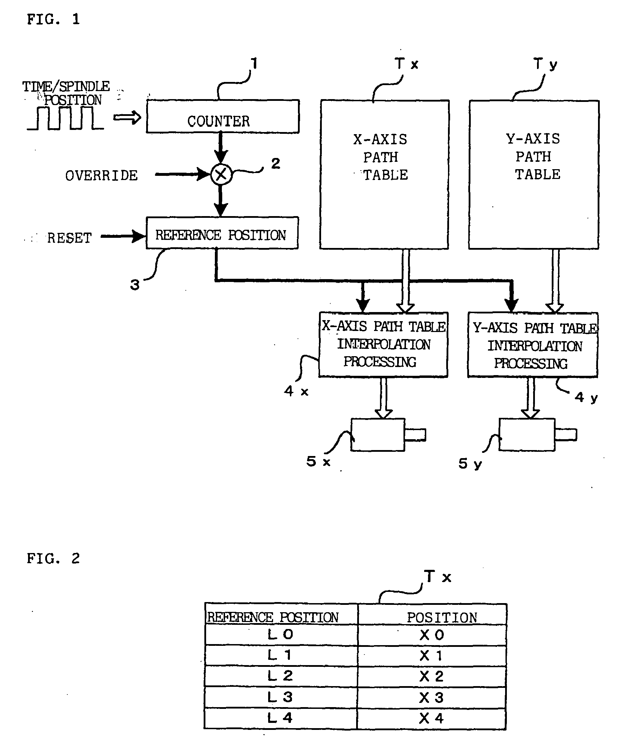

Fig. 1 is a schematic diagram illustrating one example of the operation using table format data (hereinafter, called "path table operation"). In this example, a numerical control method includes an X-axis path table Tx and a Y-axis path table Ty, and these path tables Tx, Ty store X-axis positions and Y-axis positions of a control axis corresponding to a reference position. Fig. 2 shows a conventional example of such a path table.

The X-axis path table shown in Fig. 2 stores the X-axis positions X0 to X4 corresponding to the reference positions L0 to L4. Similarly, the Y-axis path table Ty (not shown) also stores the Y-axis positions corresponding to the reference positions.

A reference pulse which is based on a pulse from a position coder disposed on a spindle, a spindle position defined by a command pulse to the spindle or the like or time provided by an external pulse generator is input to a counter 1 and counted. A count of the counter 1 is multiplied by a scale factor set up in an override means by a multiplier 2, and the multiplication result is stored in a reference position counter 3. This reference position counter 3 is reset at the time when path table operation is instructed.

A value of the reference position counter 3 is input to an X-axis path table interpolation processing portion 4x and a Y-axis path table interpolation processing portion 4y as the reference position. In the X-axis path table interpolation processing portion 4x and the Y-axis path table interpolation processing portion 4y, X-axis and Y-axis command positions corresponding to the reference position are calculated with reference to the X-axis path table Tx and Y-axis path table Ty, and a movement amount for every process cycle is obtained from the obtained command position and sent to each of servomotors 5x and 5y as a command, which drives the servomotors 5x, 5y in synchronization with each other to displace the X-axis and the Y-axis.

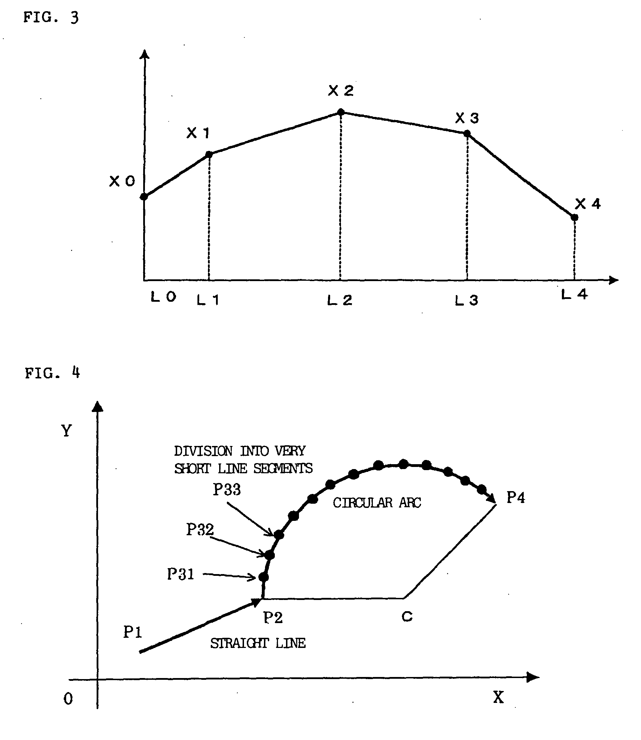

Fig. 3 shows the X-axis position which is displaced based on the X-axis path table Tx shown in Fig. 2 in graph form.

As described above, in path table operation, a machine tool or the like is operated by controlling the servomotors of the X-axis and Y-axis in synchronization with the reference position, based on data of the axis position corresponding to the reference position stored in the path tables Tx, Ty,

Also, in Japanese Patent Application Laid-Open No. 2003-303005 above, it is further explained that connection between one axis position and another axis position set up and stored in data tables may be performed by a quadratic function or three-dimensional function. That is, a gradient at a start point is set up and stored in a path table, then, a position of each control axis is derived from the quadratic function or three-dimensional function set up in advance based on the gradient, the reference axis positions of the start point and end point and a control axis position, driving and controlling control axis.

In path table operation in which a control axis is controlled using table format data, a position of each control axis relative to time or a spindle position used as a reference (hereinafter, called "reference position") is commanded in table format, therefore, when a complex shape is commanded, there is a disadvantage that because it is necessary to command the position of each control axis relative to the reference position to fit the complex shape, a volume of data may be increased.

A curved shape machined by a machine tool is often circular. However, this circular arc shape may not be commanded by using the quadratic function connection or three-dimensional function connection described in Japanese Patent Application Laid-Open No. 2003-303005 above. Therefore, regarding a circular arc as a sequence of very short straight lines, it is necessary to command the positions of each of control axes in detail in association with each of the reference positions (value of a reference parameter).

For example, as shown in Fig. 4, when a shape having a straight line from a point P1 to a point P2 and a circular arc from a point P2 to a point P4 in a X-Y plane is machined, for the circular arc portion from the point P2 to the point P4, it is necessary to create path tables Tx, Ty for storing data for commanding the X-axis positions and Y-axis positions of division points P31, P32, P33, ... at which the circular arc is divided into very short line segments, in association with the reference positions (reference parameter values).

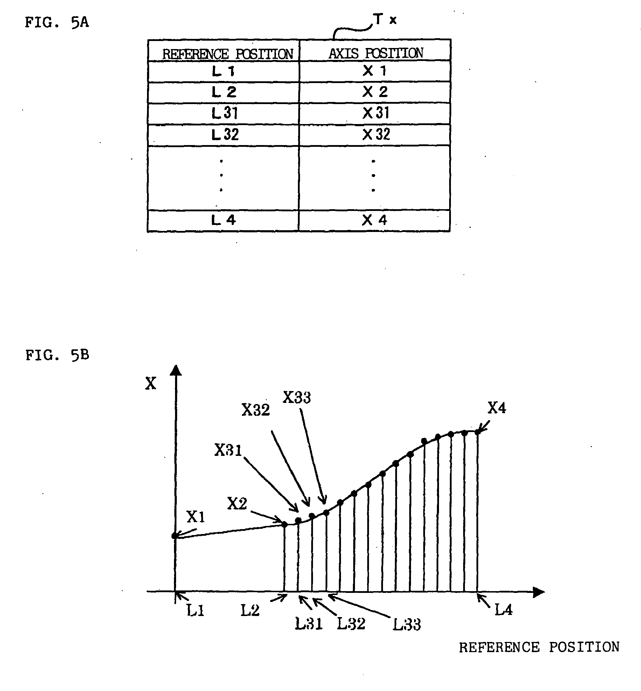

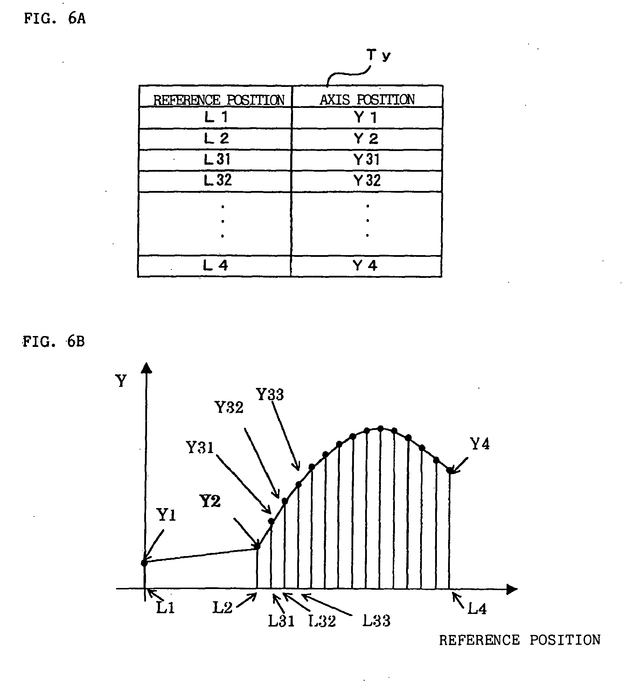

Fig. 5A illustrates data to be stored in an X-axis path table Tx when the shape shown in Fig. 4 is machined. Fig. 5B represents the data stored in the X-axis path table Tx in graph form. Further, Fig. 6A illustrates data to be stored in a Y-axis path table Ty. Fig. 6B represents the data stored in the Y-axis path table Ty in graph form.

Regarding division points P31, P32, P33, ... at which an circular arc is divided into very small segments, it is necessary to store in the X-axis path table Tx the X-axis positions X31, X32, X33, ... of the division points P31, P32, P33, ... in association with the reference positions L31, L32, L33 ..., respectively, and it is necessary to store in the Y-axis path table Ty the Y-axis positions Y31, Y32, Y33 ... of the division points P31, P32, P33, ... in association with the reference positions L31, L32, L33 ..., respectively. Therefore, data to be stored in the path tables Tx and Ty will be increased.

SUMMARY OF THE INVENTION

The present invention relates to a numerical control method for driving each of axes by commanding an axis position according to data stored in a memory table where the axis position is stored in association with a reference value consisting of time or spindle position. This numerical control method comprises a step of setting up a start point and end point of a circular arc, a center position of the circular arc, a radius of the circular arc and designation of sine or cosine in the memory table when the shape of the circular arc is commanded and step of outputting a movement command to each of axes for connecting the start point and the end point with the circular arc, using a trigonometric function defined by the center position of the circular arc, the radius of the circular arc and the designation of sine or cosine, which have been set in the memory table.

The above numerical control method may further comprise step of setting an initial angle of the circular arc, and an amount of change in angle of the circular arc with respect to unit change in the reference value, in advance, in association with the circular arc command, wherein the trigonometric function is processed based on the initial angle of the circular arc, the amount of change in angle of the circular arc with respect to unit change in the reference value, the center position of the circular arc, the radius of the circular arc, and designation of sine or cosine, which have been set, and the movement command is output to each of axes for connecting the start point and the end point with the circular arc. Further, when a table to be stored for operation using table format data is stored in a numerical controller, the numerical controller may calculate the initial angle of the circular arc and the amount of change in angle of the circular arc with respect to unit change in the reference value and sets them, based on the data stored in the table.

According to the present invention as configured as described above, a numerical control method using table format data which allows to command a circular arc shape with the comparatively small amount of data is provided. Especially, in commanding a circular arc, data to be set and stored in a table (data in table format) needs to contain nothing but positions of the start point and end point of the circular arc, the center position of the circular arc, a radius of the circular arc and designation of sine or cosine, with the result that a volume of data to be set and stored in the table is made small and it becomes easy to create data in table format.

BRIEF DESCRIPTION OF THE DRAWINGS

The aforementioned and another objects and features of the present invention will be apparent from the following description of examples with reference to the accompanying drawings, in which;

Fig. 1 is a schematic diagram illustrating one example of operation using table format data and performed by a numerical control method of the present invention and a conventional numerical control method;
Fig. 2 is a diagram illustrating one example of an X-axis path table used for operation based on data in conventional table format;
Fig. 3 is a diagram showing the X-axis path table of Fig. 2 in graph form;
Fig. 4 is a diagram illustrating a process for connecting two points with a circular arc, in operation based on the data in the conventional table format;
Fig. 5A is a diagram illustrating an X-axis table used for the process to connect two points with a circular arc, in operation based on the data in the conventional table format;
Fig. 5B is a diagram showing the X-axis table of Fig. 5A in graph form;

Fig. 6A is a diagram illustrating a Y-axis table used for connecting two points with a circular arc, in operation based on the data in the conventional table format;

Fig. 6B is a diagram showing the Y-axis table of Fig. 6A in graph form;

Fig. 7 is a diagram illustrating a process for connecting two points with a circular arc, in operation using table format data and performed by the numerical control method of the present invention;

Figs. 8A and 8B are diagrams illustrating an X-axis table and Y-axis table used for a process to connect two points with a circular arc, in operation using table format data and performed by the numerical control method of the present invention;

Fig. 9 is a schematic block diagram illustrating one aspect of a numerical controller for executing the numerical control method of the present invention;

Fig. 10 is a flow chart illustrating an X-axis path table interpolation processing to be carried out by a CPU in the numerical controller shown in Fig. 9 during path table operation; and

Fig. 11 is a flow chart illustrating a Y-axis path table interpolation processing to be carried out by a CPU in the numerical controller shown in Fig. 9 during path table operation.

DETAILED DESCRIPTION OF THE PREFERRED EMBODIMENTS

Operation using table format data of the present invention is performed with the same configuration as that used for a conventional path table operation shown in Fig. 1, but contents of data stored in an X-axis path table Tx and a Y-axis path table Ty, and contents of an X-axis path table interpolation processing portion 4x and a Y-axis path table interpolation processing portion 4y are different from those used in the conventional path table operation.

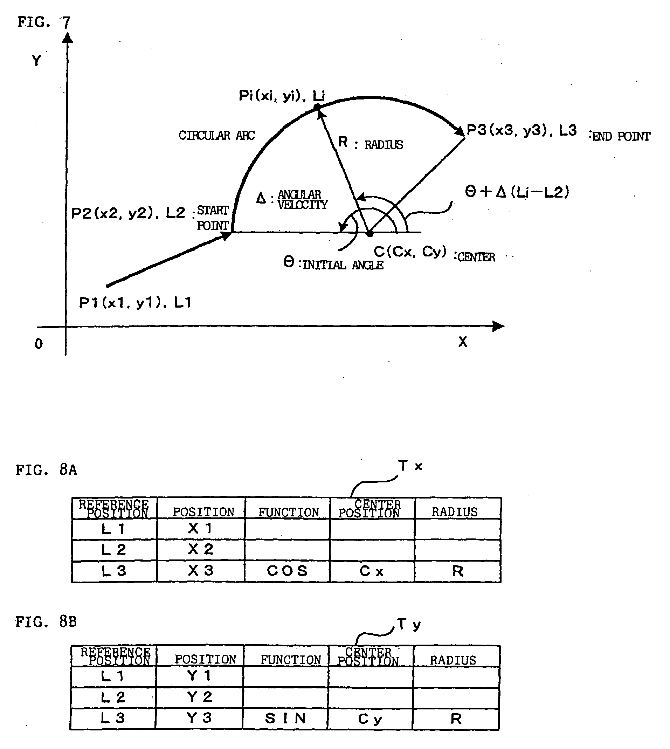

Fig. 7 is a schematic diagram illustrating a process for creating a command for a circular arc shape, using table format data of the present invention. In an example shown in this figure, a machining shape has a straight line from a point P1 (X1, Y1) of a first reference position L1 to a point P2 (X2, Y2) of a second reference position L2 in an X-Y plane and a circular arc from the point P2 to a point P3 (X3, Y3) of a third reference position L3. Further, data of the axis positions is set in a memory table in association with the reference positions L at the point P1, P2 and P3 on the machining shape.

A radius of the circular arc is denoted by R, a center position of the circular arc C is denoted by (Cx, Cy), an amount of change in angle with respect to unit change in the reference position L (hereinafter, this amount of change in angle is called "angular velocity") is denoted by Δ, and a circular arc initial angle at the point P2 where the circular arc starts is denoted by Θ. Then, an X-axis position and a Y-axis position of a control axis at the reference position Li are obtained from the following expressions (1) and (2):

$$Xi = Cx + R * \cos\{\Delta * (Li - L2) + \Theta\} \qquad \ldots (1)$$

$$Yi = Cy + R * \sin\{\Delta * (Li - L2) + \Theta\} \qquad \ldots (2)$$

and

$$X2 = Cx + R * \cos \Theta \qquad \ldots (3)$$

$$X3 = Cx + R * \cos\{\Delta * (L3 - L2) + \Theta\} \qquad \ldots (4)$$

According to the expressions (3) and (4) above, the circular arc initial angle Θ and angular velocity Δ are obtained based on the radius of the circular arc R, the center position of the circular arc (Cx, Cy), and X-axis positions of the start point P2 and end point P3 of the circular arc from the following expressions:

$$\Theta = \cos^{-1}\{(X2 - Cx)/R\} \qquad \ldots (5)$$

$$\Delta = [\cos^{-1}\{(X3 - Cx)/R\} - \Theta]/(L3 - L2) \qquad \ldots (6)$$

Thus, by substituting the obtained circular arc initial angle $\Theta$ and angle velocity $\Delta$ into the expressions (1) and (2) above, an X-axis position and Y-axis position (Xi, Yi) on the circular arc corresponding to the reference position Li are obtained.

When a reference line for measuring a circular arc initial angle $\Theta$ is a line parallel to the X-axis, as shown in Fig. 7, the X-axis position and Y-axis position (Xi, Yi) on the circular arc corresponding to the reference position Li may be obtained from the expressions (1) to (6) above. Alternately, when a reference line for measuring a circular arc initial angle $\Theta$ is a line parallel to the Y-axis, the X-axis position and Y-axis position (Xi, Yi) on the circular arc corresponding to the reference position Li may be obtained from the following expressions (1') to (6').

$$Xi = Cx + R * \sin\{\Delta * (Li - L2) + \Theta\} \qquad \ldots (1')$$

$$Yi = Cy + R * \cos\{\Delta * (Li - L2) + \Theta\} \qquad \ldots (2')$$

$$\Theta = \sin^{-1}\{(X2 - Cx)/R\} \qquad \ldots (5')$$

$$\Delta = [\sin^{-1}\{(X3 - Cx)/R\} - \Theta]/(L3 - L2) \qquad \ldots (6')$$

Further, the X-axis position and Y-axis position (Xi, Yi) on the straight line between the point P1 and point P2 corresponding to the reference position Li are obtained from the following expressions (7) and (8):

$$Xi = X1 + \{(Li - L1) * (X2 - X1)\}/(L2 - L1) \ldots (7)$$

$$Yi = Y1 + \{(Li - L1) * (Y2 - Y1)\}/(L2 - L1) \ldots (8)$$

Then, in this embodiment, an X-axis path table Tx and a Y-axis path table Ty used as a memory table are configured as shown in Figs. 8A and 8B.

Fig. 8A is a diagram illustrating an X-axis path table Tx used for commanding the shape shown in Fig. 7. Similarly, Fig. 8B is a diagram illustrating a Y-axis path table Ty used for commanding the shape shown in Fig. 7.

In the X-axis path table Tx and Y-axis path table Ty, the position of each axis, the function for each axis used when connecting one set position and another set position with a circular arc, and the center position and radius of the circular arc are stored in association with the reference position L. In the X-axis path table Tx in Fig. 8A, the X-axis position X1 is set in association with the reference position L1 of the point P1, and the X-axis position X2 is set in association with the reference position L2 of the point P2. Since the point P1 and point P2 are connected with a straight line, the function, center position and radius are not set. Since the X-axis position X3 is set in association with the reference position L3 of the point P3 and the point P2 and point P3 are connected with a circular arc, "COS" representing a cosine function of a trigonometric function is set as the function, and the X-axis position Cx of the center of the circular arc and the radius R of the circular arc are set.

Similarly, in the Y-axis path table Ty, the Y-axis position Y1 is set in association with the reference position L1, the Y-axis position Y2 is set in association with the reference position L2, the Y-axis position Y3 is set in association with the reference position L3, and "SIN" representing a sine function is set as the function, and the Y-axis position Cy of the center of the circular arc and the radius R of the circular arc are set.

When the initial angle $\Theta$ of the circular arc is represented, as shown in Fig. 7, by a rotation angle to a line parallel to the X-axis, COS is specified for the X-axis, as the function, as shown in Fig. 8A, and SIN is specified for the Y-axis, as the function, as shown in Fig. 8B. Alternately, when the initial angle $\Theta$ of the circular arc is represented by a rotation angle to a line parallel to the Y-axis, SIN is specified as the function for the X-axis, and COS is specified as the function for the Y-axis.

Further, when one specified point and another specified point are connected with a curve of a trigonometric function except a circular arc, that function and position data specifying positions on the curve according to the function are specified and stored in the path table.

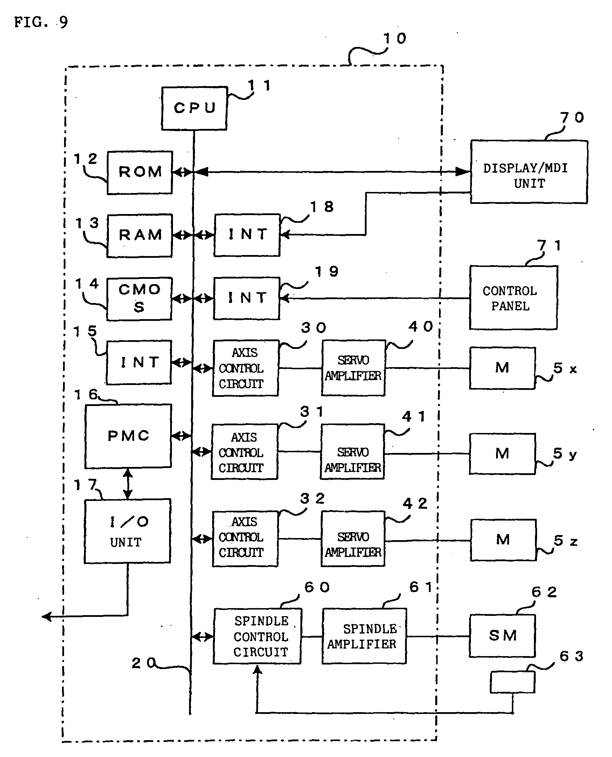

Fig. 9 is a block diagram of a substantial part of one embodiment of a numerical controller for applying the numerical control method of the present invention. A CPU 11, which controls generally a numerical controller 10, reads out a system program stored in a ROM 12 through a bus 20 and controls the entire numerical controller according to the system program. A RAM 13 stores temporary calculation data, display data and various data input by an operator through a display/MDI unit 70. A CMOS memory 14 is backed up by a battery (not shown) and is configured as a nonvolatile memory to retain a storage function even when the power source of the numerical controller 10 is in off state. In this CMOS memory 14, a machining program read in through an interface 15, a machining program input through the display/MDI unit 70 and the like are stored, and further, the X-axis path table Tx and Y-axis path table described above Ty are stored in advance.

The interface 15 allows connection between the numerical controller 10 and an external device. A PMC (Programmable Machine Controller) 16 outputs a signal to an auxiliary device of a machine tool through an I/O unit 17 based on a built-in sequence program in the numerical controller 10 so that it controls the machine tool. Further, the PMC receives the signals from various switches disposed on a body of the machine tool and executes a required signal processing, and then, delivers them to the CPU 11.

The display/MDI unit 70 is a manual data input unit including a display composed of a CRT or liquid crystal display, and a keyboard etc. An interface 18 receives a command and data from the keyboard of the display/MDI unit 70 and delivers them to the CPU 11. Another interface 19 is connected to a control panel 71 and receives various commands from the control panel 71.

Axis control circuits 30, 31, 32 for respective axes receive a movement command for each of the axes from the CPU 11 and output the command to corresponding servo amplifiers 40, 41, 42. The servo amplifiers 40, 41, 42 receive this command and drive servomotors 5x, 5y, 5z for respective axes. The servomotors 5x, 5y, 5z for respective axes include a built-in position/velocity detector, and a position and velocity feedback signal from the position/velocity detector is fed back to the axis control circuits 30, 31, 32, carrying out position/velocity feedback control based on the fed back signal. In Fig. 9, the position/velocity feedback is omitted.

A spindle control circuit 60 receives a spindle rotation command and outputs a spindle velocity signal to a spindle amplifier 61. The spindle amplifier 61 receives the spindle velocity signal and rotates a spindle motor 62 for driving a spindle at the prescribed rotation speed. A position coder 63 is synchronized with rotation of the spindle and feeds back a feedback pulse and a signal for each 360-degree rotation to the spindle control circuit 60. Velocity control is carried out based on this feedback signal. The feedback pulse and signal for each 360-degree rotation are read out by the CPU 11 through the spindle control circuit 60. When this feedback pulse is used as a reference position, it is counted by a counter provided in the RAM 13 (the counter 1 shown in Fig. 1). Alternately, a spindle command pulse may be used as a reference pulse.

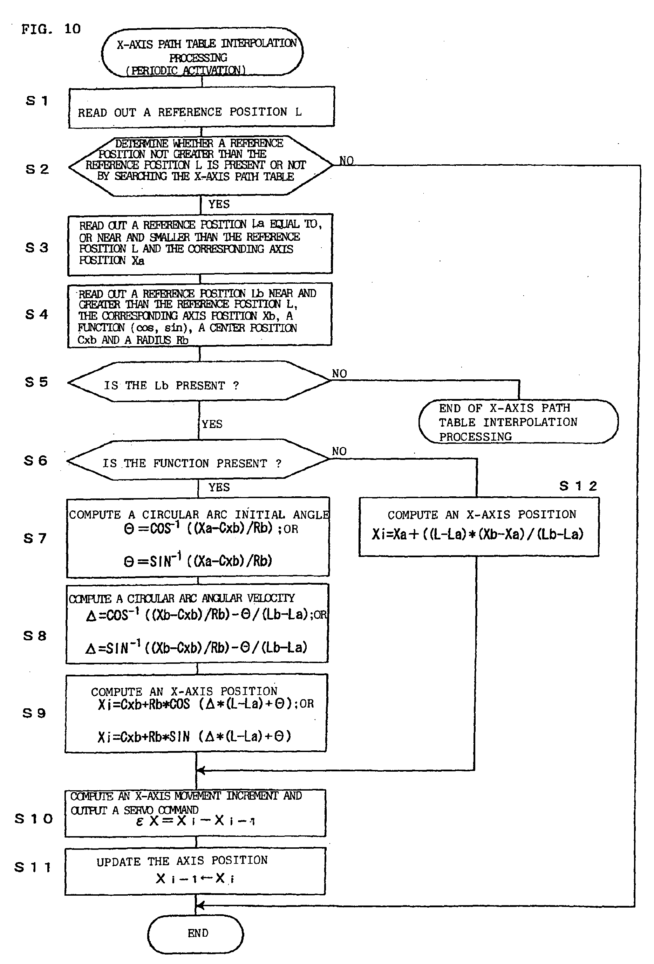

Fig. 10 is a flow chart illustrating an algorithm with which the CPU 11 in the numerical controller 10 shown in Fig. 9 executes an X-axis path table interpolation processing (the X-axis path table interpolation processing shown in Fig. 1) during path table operation.

The CPU 11 of the numerical controller 10 executes a process shown in Fig. 10 at every predetermined cycle when a path table operation command is input through a program etc. Further, on receiving a path table operation command, the counter 1 and the reference position counter 3 shown in Fig. 1 are reset. Subsequently, a value obtained by multiplying the counter value in the counter 1 for counting the feedback pulse (or a command value) from the position coder 63 indicating a spindle position or a time reference pulse by a preset override value is added to the reference position counter 3 for storing the reference position L, updating the reference position (reference value).

Then, first, the CPU 11 reads out the reference position L from the reference position counter 3 (step S1) and determines whether a reference position not greater than the reference position L read out (hereinafter, a reference position stored in the X-axis path table is called "stored reference position") is present or not by searching the X-axis path table (step S2). When the stored reference position not greater than the reference position L is not present, a process for a cycle currently executed is terminated. That is, the CPU 11 waits until the reference position L reaches the set stored reference position.

When the stored reference position not greater than the reference position L is detected from the X-axis path table, a stored reference position which is equal to or smaller than this reference position L read out, and an axis position stored in association with the above stored reference position are read from the X-axis path table. This stored reference position is set as a start point reference position La and an X-axis position stored in association with this start point reference position La is set as a start point X-axis position Xa, and these are stored in a register, respectively. When the X-axis path table Tx is of a table shown in Fig. 8A, first, the stored reference position L1 and the X-axis position X1 corresponding to this stored reference position L1 are read out, and then, the start point reference position La is set as L1, La = L1, and the start point X-axis position Xa is set as X1, Xa = X1 (step S3).

Next, a stored reference position near and greater than the reference position L read from the reference position counter 3 is sought by searching the X-axis path table. As the result of search, when such a stored reference position is found, this stored reference position is set as an end point reference position Lb and an X-axis position stored in association with this stored reference position Lb is set as an end point X-axis position Xb, and further, when the function, the center position Cx and the radius R are stored, these are stored as the function (COS, SIN), the X-axis position Cxb of the center and the radius Rb (step S4).

When any stored reference position greater than the reference position L read from the reference position counter 3 is not found after searching the X-axis path table in step S4, path table operation is terminated (step S5).

When a stored reference position Lb greater than the reference position L is found, on the other hand, it is judged whether or not a function has been already been set in association with the stored reference position Lb, and this function is read out (step S6). When the function is not read out, then, it is determined that connection is performed using a straight line, then, an X-axis position Xi is calculated based on the following expression corresponding to the expression (7) above (step S12).

$$Xi = Xa + \{(L - La) * (Xb - Xa)\}/(Lb - La)$$

For example, in the example of the X-axis path table Tx shown in Fig. 8A, when the start point reference position La = L1 and the start point X-axis position Xa = X1 corresponding to the start point reference position are read out in step S3, and the end point reference position Lb = L2 and the end point X-axis position Xb = X2 corresponding to the end point reference position are read out in step S4, the X-axis position Xi is calculated based on the expression (7) (step S12). Then, an X-axis movement increment εX is calculated by subtracting a current X-axis position Xi-1 at a previous cycle stored in a current value register from the X-axis position Xi obtained in such a manner, and the calculation result is output to the axis control circuit 30 for driving and controlling the X-axis servomotor 5x (step S10). In the axis control circuit 30, similar to a conventional manner, feed back processing of position, velocity and current is carried out and the X-axis servomotor 5x is driven through the servo amplifier 40.

Then, the register for storing the X-axis current position is updated, the X-axis position Xi obtained in step S12 is stored as the X-axis position Xi-1 (step S11), and the process for the current process cycle is terminated.

Then, the processes for steps S1 to S6, S12, S10 and S11 are executed at every process cycle until the reference position L read from the reference position counter 3 in step S1 becomes equal to or greater than a next stored reference position (L2) stored in the X-axis path table Tx.

When the reference position L read from the reference position counter 3 reaches the next stored reference position stored in the X-axis path table Tx, then, the above-mentioned next stored reference position is read out as the start point reference position La in step S3. In the example of the X-axis path table Tx of Fig. 8A, when the reference position L read from the reference position counter 3 becomes equal to or greater than the relevant stored reference position L2, the stored reference position L2 is read out as the start point reference position La in step S3, and the X-axis position X2 stored in association with this stored reference position L2 is read out as the start point X-axis position Xa. Further, a stored reference position L3 is read out as the end point reference position Lb, and an X-axis position X3 stored in association with this stored reference position L3 is read out as the end point X-axis position Xb, and further, the function COS, the center position Cx and the radius R are read out as COS, Cxb and Rb, respectively, in step S4.

Since the function has been set, process proceeds from step S6 to step S7, and a circular arc initial angle Θ is calculated based on the start point X-axis position Xa (= X2), the end point X-axis position Xb (= X3), the center position Cxb (= Cx), the radius Rb (= R), the start point reference position La and the end point reference position Lb which were read out, according to the following expression corresponding to the expression (5) (step S7).

$$\Theta = \cos^{-1} \{(Xa - Cxb)/Rb\}$$

When a circular arc rotation angle is defined as an angle to a line parallel to the Y-axis, "SIN" is stored as the function in the X-axis path table, and computation for obtaining the circular arc initial angle Θ at this step S7 is executed according to the following expression corresponding to the expression (5'):

$$\Theta = \sin^{-1}\{(Xa - Cxb)/Rb\}$$

Further, computation for obtaining a circular arc angular velocity $\Delta$ is executed according to the following expression corresponding to the expression (6):

$$\Delta = [\cos^{-1}\{(Xb - Cxb)/R\} - \Theta]/(Lb - La)$$

When a circular arc rotation angle is defined as an angle to a line parallel to the Y-axis, computation for obtaining the circular arc angular velocity $\Delta$ is executed according to the following expression corresponding to the expression (6') (step S8):

$$\Delta = [\sin^{-1}\{(Xb - Cxb)/R\} - \Theta]/(Lb - La)$$

The X-axis position Xi corresponding to the reference position L is obtained by calculating the following expressions corresponding to the expression (1) (when a circular arc rotation angle is defined as an angle to a line parallel to the X-axis) or the expression (1') (when the reference for the circular arc rotation angle is an angle made with a line parallel to the Y-axis) described above, based on the obtained circular arc initial angle $\Theta$ and circular arc angular velocity $\Delta$ (step S9).

$$Xi = Cxb + Rb * \cos\{\Delta * (L - La) + \Theta\}$$

or

$$Xi = Cxb + Rb * \sin\{\Delta * (L - La) + \Theta\}$$

Then, the X-axis movement increment $\varepsilon X$ is calculated by subtracting the X-axis position Xi-1, obtained at a previous cycle and stored as the current position, from the obtained X-axis position Xi corresponding to the reference position L, and the calculation result is output to the axis control circuit 30, further driving and controlling the X-axis servomotor 5x (step S10). Further, the X-axis position Xi obtained at the current process cycle is stored as the current position Xi-1 (step S11), and then, the process for the current process cycle is terminated.

Then, in the example shown in Figs. 7, 8A and 8B, the processes in steps S1 to S11 are executed at every cycle until the reference position L reaches the stored reference position L3 and the X-axis position reaches X3, then the circular arc reaches the end point.

Therefore, the aforementioned processes are executed based on the reference position L read from the reference position counter 3 and data stored in the X-axis path table Tx, and thus, path table operation is carried out. Further, when the reference position L read out in step S1 reaches the last reference position stored in X-axis path table Tx, the corresponding reference position Lb can not be read out in step S4, as a result, this path table operation is terminated based on the determination in step S5.

In the example shown in Figs. 7, 8A and 8B, when the reference position L read out in step S1 reaches the last reference position L3 in the X-axis path table Tx, this path table operation is terminated in step S4, since the reference position greater than the relevant reference position L is not stored.

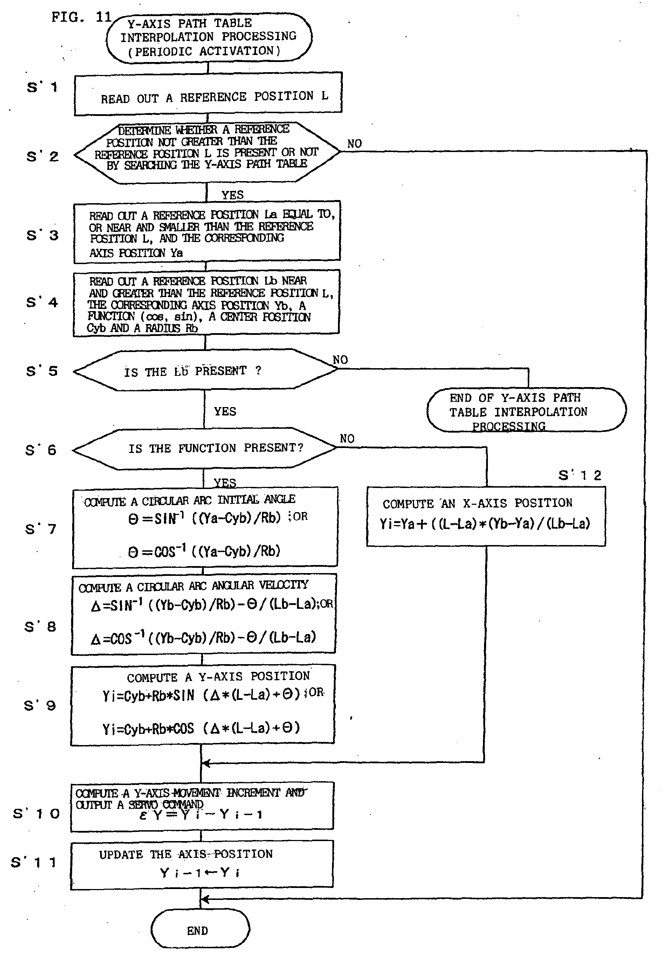

The Y-axis path table interpolation processing is equal to the X-axis path table interpolation processing shown in Fig. 10. Fig. 11 shows a flow chart illustrating an algorithm for executing the Y-axis path table interpolation processing. Because it is approximately equal to the X-axis path table interpolation processing, a detailed description thereof will be omitted.

As apparent from comparison of Fig. 10 with Fig. 11, process in steps S'1 to S'12 are corresponding to process in steps S1 to S12, respectively, therefore, the X-axis and Y-axis path table interpolation processing may be concurrently executed.

Further, the circular arc initial angle Θ and the circular arc angular velocity Δ obtained in steps S7 (S'7) and S8 (S'8) can be obtained in relation to either the X-axis or Y-axis, because calculation of the circular arc initial angle Θ and the circular arc angular velocity Δ based on the X-axis is equivalent to the calculation of the circular arc initial angle Θ and the circular arc angular velocity Δ based on Y-axis.

Moreover, when an circular arc command is issued, the circular arc initial angle Θ and the circular arc angular velocity Δ, each of which has an unique value in the interpolation processing according to the issued circular arc command, may be calculated in advance, and then, the circular arc initial angle Θ and the circular arc angular velocity Δ may be stored together with the center position and radius of the circular arc in at least one of the X-axis path table and the Y-axis path table. Further, when the X-axis and Y-axis path tables are stored in memory, the circular arc initial angle Θ and the circular arc angular velocity Δ may be calculated for each of issued circular arc commands and stored in association with each of the circular arc commands in the path tables. In that case, when carrying out path table operation, the processes in steps S7, S'7, S8, S'8 can be omitted by using the stored circular arc initial angle Θ and circular arc angular velocity Δ.

## Claims

1.  A numerical control method for driving each of axes by commanding an axis position according to data stored in a memory table where the axis position is stored in association with a reference value consisting of time or spindle position, comprising:

    setting up a start point and end point of a circular arc, a center position of the circular arc, a radius of the circular arc and designation of sine or cosine in the memory table when the shape of the circular arc is commanded; and
    outputting a movement command to each of axes for connecting the start point and the end point with the circular arc, using a trigonometric function defined by the center position of the circular arc, the radius of the circular arc and the designation of sine or cosine, which have been set in the memory table.

2.  The numerical control method according to claim 1, further comprising:

    setting an initial angle of the circular arc, and an amount of change in angle of the circular arc with respect to unit change in the reference value, in advance, in association with the circular arc command, wherein
    the trigonometric function is processed based on the initial angle of the circular arc, the amount of change in angle of the circular arc with respect to unit change in the reference value, the center position of the circular arc, the radius of the circular arc, and designation of sine or cosine, which have been set, and the movement command is output to each of axes for connecting the start point and the end point with the circular arc.

3.  The numerical control method according to claim 2, wherein
    when a table to be stored for operation using table format data is stored in a numerical controller, the numerical controller calculates the initial angle of the circular arc and the amount of change in angle of the circular arc with respect to unit change in the reference value and sets them, based on the data stored in the table.

FIG. 1

TIME/SPINDLE
POSITION

⟹ COUNTER — 1

OVERRIDE → ⊗ — 2

RESET → REFERENCE POSITION

3

Tx

X-AXIS
PATH
TABLE

Ty

Y-AXIS
PATH
TABLE

X-AXIS PATH TABLE
INTERPOLATION
PROCESSING

4x

Y-AXIS PATH TABLE
INTERPOLATION
PROCESSING

4y

5x

5y

FIG. 2

Tx

| REFERENCE POSITION | POSITION |
|---|---|
| L 0 | X 0 |
| L 1 | X 1 |
| L 2 | X 2 |
| L 3 | X 3 |
| L 4 | X 4 |

FIG. 3

FIG. 4

FIG. 5A

Tx

| REFERENCE POSITION | AXIS POSITION |
|---|---|
| L 1 | X 1 |
| L 2 | X 2 |
| L 31 | X 31 |
| L 32 | X 32 |
| . . . | . . . |
| L 4 | X 4 |

FIG. 5B

FIG. 6A

Ty

| REFERENCE POSITION | AXIS POSITION |
|---|---|
| L 1 | Y 1 |
| L 2 | Y 2 |
| L 31 | Y 31 |
| L 32 | Y 32 |
| ⋮ | ⋮ |
| L 4 | Y 4 |

FIG. 6B

FIG. 7

FIG. 8A

Tx

| REFERENCE POSITION | POSITION | FUNCTION | CENTER POSITION | RADIUS |
|---|---|---|---|---|
| L 1 | X 1 | | | |
| L 2 | X 2 | | | |
| L 3 | X 3 | C O S | C x | R |

FIG. 8B

Ty

| REFERENCE POSITION | POSITION | FUNCTION | CENTER POSITION | RADIUS |
|---|---|---|---|---|
| L 1 | Y 1 | | | |
| L 2 | Y 2 | | | |
| L 3 | Y 3 | S I N | C y | R |

FIG. 9

FIG. 10

```
        ┌─────────────────────────────┐
        │  X-AXIS PATH TABLE INTERPOLATION │
        │         PROCESSING           │
        │      (PERIODIC ACTIVATION)    │
        └─────────────────────────────┘
```

**S1** READ OUT A REFERENCE POSITION L

**S2** DETERMINE WHETHER A REFERENCE POSITION NOT GREATER THAN THE REFERENCE POSITION L IS PRESENT OR NOT BY SEARCHING THE X-AXIS PATH TABLE — NO

YES

**S3** READ OUT A REFERENCE POSITION La EQUAL TO, OR NEAR AND SMALLER THAN THE REFERENCE POSITION L AND THE CORRESPONDING AXIS POSITION Xa

**S4** READ OUT A REFERENCE POSITION Lb NEAR AND GREATER THAN THE REFERENCE POSITION L, THE CORRESPONDING AXIS POSITION Xb, A FUNCTION (cos, sin), A CENTER POSITION Cxb AND A RADIUS Rb

**S5** IS THE Lb PRESENT ? — NO

YES

END OF X-AXIS PATH TABLE INTERPOLATION PROCESSING

**S6** IS THE FUNCTION PRESENT ? — NO

YES

**S12** COMPUTE AN X-AXIS POSITION
$$Xi = Xa + ((L-La) * (Xb-Xa) / (Lb-La))$$

**S7** COMPUTE A CIRCULAR ARC INITIAL ANGLE
$$\Theta = \cos^{-1}((Xa-Cxb)/Rb) ; \text{OR}$$
$$\Theta = \sin^{-1}((Xa-Cxb)/Rb)$$

**S8** COMPUTE A CIRCULAR ARC ANGULAR VELOCITY
$$\Delta = \cos^{-1}((Xb-Cxb)/Rb) - \Theta / (Lb-La) ; \text{OR}$$
$$\Delta = \sin^{-1}((Xb-Cxb)/Rb) - \Theta / (Lb-La)$$

**S9** COMPUTE AN X-AXIS POSITION
$$Xi = Cxb + Rb * \cos(\Delta * (L-La) + \Theta) ; \text{OR}$$
$$Xi = Cxb + Rb * \sin(\Delta * (L-La) + \Theta)$$

**S10** COMPUTE AN X-AXIS MOVEMENT INCREMENT AND OUTPUT A SERVO COMMAND
$$\varepsilon X = X_i - X_{i-1}$$

**S11** UPDATE THE AXIS POSITION
$$X_{i-1} \leftarrow X_i$$

END

FIG. 11

```
   ┌─────────────────────────┐
   │ Y-AXIS PATH TABLE       │
   │ INTERPOLATION PROCESSING│
   │ (PERIODIC ACTIVATION)   │
   └─────────────────────────┘
```

**S' 1** — READ OUT A REFERENCE POSITION L

**S' 2** — DETERMINE WHETHER A REFERENCE POSITION NOT GREATER THAN THE REFERENCE POSITION L IS PRESENT OR NOT BY SEARCHING THE Y-AXIS PATH TABLE — NO

YES

**S' 3** — READ OUT A REFERENCE POSITION La EQUAL TO, OR NEAR AND SMALLER THAN THE REFERENCE POSITION L, AND THE CORRESPONDING AXIS POSITION Ya

**S' 4** — READ OUT A REFERENCE POSITION Lb NEAR AND GREATER THAN THE REFERENCE POSITION L, THE CORRESPONDING AXIS POSITION Yb, A FUNCTION (cos, sin), A CENTER POSITION Cyb AND A RADIUS Rb

**S' 5** — IS THE Lb PRESENT ? — NO

YES

END OF Y-AXIS PATH TABLE INTERPOLATION PROCESSING

**S' 6** — IS THE FUNCTION PRESENT? — NO

YES

**S' 12**

COMPUTE AN X-AXIS POSITION
$$Yi = Ya + ((L-La)*(Yb-Ya)/(Lb-La))$$

**S' 7** — COMPUTE A CIRCULAR ARC INITIAL ANGLE
$$\Theta = SIN^{-1}((Ya-Cyb)/Rb) ; OR$$
$$\Theta = COS^{-1}((Ya-Cyb)/Rb)$$

**S' 8** — COMPUTE A CIRCULAR ARC ANGULAR VELOCITY
$$\Delta = SIN^{-1}((Yb-Cyb)/Rb) - \Theta/(Lb-La); OR$$
$$\Delta = COS^{-1}((Yb-Cyb)/Rb) - \Theta/(Lb-La)$$

**S' 9** — COMPUTE A Y-AXIS POSITION
$$Yi = Cyb + Rb*SIN(\Delta*(L-La)+\Theta) ; OR$$
$$Yi = Cyb + Rb*COS(\Delta*(L-La)+\Theta)$$

**S' 10** — COMPUTE A Y-AXIS MOVEMENT INCREMENT AND OUTPUT A SERVO COMMAND
$$\varepsilon Y = Yi - Yi - 1$$

**S' 11** — UPDATE THE AXIS POSITION
$$Yi - 1 \leftarrow Yi$$

END

**EP 1 818 745 A2**

## REFERENCES CITED IN THE DESCRIPTION

### Patent documents cited in the description

- JP 59177604 A

- JP 2003303005 A